# EUROPÄISCHE PATENTSCHRIFT

(11) **EP 2 401 810 B1**
(45) Veröffentlichungstag und Bekanntmachung des Hinweises auf die Patenterteilung: **12.03.2014**
(21) Anmeldenummer: 10700162.0
(22) Anmeldetag: 08.01.2010
(51) Int. Cl.: H02P 21/00, H02P 29/02

(54) **VERFAHREN ZUM BETREIBEN EINER EINEN PULSWECHSELRICHTER AUFWEISENDEN DREHFELDMASCHINE**
METHOD FOR OPERATING A ROTATING FIELD MACHINE CONTAINING A PULSE-CONTROLLED CONVERTER
PROCÉDÉ POUR FAIRE FONCTIONNER UN MOTEUR À CHAMP TOURNANT PRÉSENTANT UN ONDULEUR À MODULATION D'IMPULSIONS EN LARGEUR

(30) Priorität: 25.02.2009 DE 102009001125
(43) Veröffentlichungstag der Anmeldung: 04.01.2012
(73) Patentinhaber: Robert Bosch GmbH, 70442 Stuttgart (DE)
(72) Erfinder: RAICHLE, Daniel, 71735 Eberdingen-Nussdorf (DE); GOETTING, Gunther, 70469 Stuttgart (DE); EISENHARDT, Martin, 71272 Renningen (DE)
(86) Internationale Anmeldenummer: PCT/EP2010/050136
(87) Internationale Veröffentlichungsnummer: WO 2010/097246

(56) Entgegenhaltungen:
- EP-A1- 1 886 900
- EP-A2- 2 015 445
- DE-A1- 10 219 826

## Beschreibung

Die Erfindung betrifft ein Verfahren zum Betreiben einer einen Pulswechselrichter aufweisenden Drehfeldmaschine, mit den Schritten: Bestimmen eines Stromsollwerts jeweils für einen Strom in Längs- und/oder Querrichtung aufgrund eines vorgegebenen Drehmoments, Ermitteln eines Spannungssollwerts jeweils für eine Spannung in Längs- und/oder Querrichtung anhand des Stromsollwerts und/oder eines an dem Pulswechselrichter bestimmten Stromistwerts, Steuern und/oder Regeln der Drehfeldmaschine entsprechend dem ermittelten Spannungssollwert. Die Erfindung betrifft ferner eine Drehfeldmaschine.

### Stand der Technik

Verfahren der eingangs genannten Art sind aus dem Stand der Technik bekannt. Beispielsweise beschreibt die DE 102 19 826 A1 ein Verfahren und eine Vorrichtung zur feldorientierten Regelung einer Synchronmaschine. Dabei werden die Ausgangsgrößen eines Längsstromreglers und eines Querstromreglers in einem stationären Entkopplungsnetzwerk in eine Längsspannungskomponente und eine Querspannungskomponente umgewandelt und diese anschließend in Abhängigkeit von der Drehzahl der Synchronmaschine einer Begrenzung unterworfen. Die begrenzten Längsspannungs- und Querspannungskomponenten werden in einem Transformator in Spannungen eines Mehrphasen-Drehstromsystem umgesetzt. Diese Spannungen werden an einen Pulswechselrichter weitergegeben und von diesem in eine Regelspannung für die Synchronmaschine umgesetzt. Die genannten Drehfeldmaschinen werden beispielsweise in elektrischen Antrieben, insbesondere für Hybrid- und Elektrofahrzeuge, eingesetzt. Zum Betrieb der Drehfeldmaschinen werden Pulswechselrichter verwendet. Die genannten elektrischen Antriebe haben eine Reihe von Diagnosefunktionen. Mit diesen können üblicherweise Totalausfälle von Elementen in der Drehfeldmaschine, insbesondere in dem Pulswechselrichter, festgestellt werden. Diese Diagnosefunktionen müssen bisher vergleichsweise aufwendig und damit kostenträchtig umgesetzt werden.

### Offenbarung der Erfindung

Demgegenüber ermöglicht es das Verfahren mit den in Anspruch 1 genannten Merkmalen, Fehler in einem Leistungsteil des Pulswechselrichters beziehungsweise in der Drehfeldmaschine zu erkennen, wobei das Verfahren mit geringen Kosten umgesetzt werden kann. Das Verfahren ermöglicht es insbesondere, lockere Phasenanschlüsse an dem Pulswechselrichter zu erkennen. Dies wird erfindungsgemäß erreicht, indem zusätzlich mit einem Modell ein Modellwert jeweils für die Spannung in Längs- und/oder Querrichtung bestimmt, die Differenz zwischen Spannungssollwert und Modellwert ermittelt und bei Überschreiten einer vorgebbaren Maximaldifferenz ein Fehlersignal ausgelöst wird. Die Erfindung verwendet ein Modell der Drehfeldmaschine, das parallel zum Stromregler der Drehfeldmaschine gerechnet wird. Daraus resultieren Modellwerte, das heißt Spannungen in Längs- und/oder Querrichtung. Weisen diese eine zu große Differenz zu den Spannungssollwerten in Längs- und/oder Querrichtung auf, wird also die Maximaldifferenz überschritten, so wird ein Fehlersignal ausgelöst. Nach Auftreten des Fehlersignals können geeignete Maßnahmen zur Reaktion auf den Defekt der Drehfeldmaschine eingeleitet werden. Das Modell ist dabei auf die Drehfeldmaschine beziehungsweise deren Pulswechselrichter derart eingestellt, dass in einem Normalbetrieb der Drehfeldmaschine die Differenz zwischen dem Spannungssollwert und dem Modellwert klein ist. Strom beziehungsweise die Spannung in Längsrichtung bezeichnen hier die feldbildenden Größen, während der Strom beziehungsweise die Spannung in Querrichtung die momentbildenden Größen darstellen. Als Eingangsgrößen für das Modell werden beispielsweise der Stromsollwert und/oder der an dem Pulswechselrichter bestimmte Stromistwert verwendet. Als Ausgangsgröße liefert das Modell den Modellwert, während der Spannungssollwert für die Drehfeldmaschine auf die beschriebene Weise bestimmt werden kann. Wenn die Differenz zwischen Spannungssollwert und Modellwert zu groß wird und dabei die vorgebbare Maximaldifferenz überschreitet, dann ist dies ein Hinweis darauf, dass das vorgegebene Drehmoment aufgrund eines Fehlers in der Drehfeldmaschine oder dem Pulswechselrichter nicht eingestellt werden kann. Dabei werden auch lockere Phasenanschlüsse an dem Pulswechselrichter erkannt, weil aufgrund des dann hohen Übergangswiderstands der Ständerwiderstand des Modells sich gravierend von dem realen Ständerwiderstand unterscheidet.

Eine Weiterbildung der Erfindung sieht vor, dass das Modell den Stromsollwert und/oder den Stromistwert und/oder eine Drehzahl der Drehfeldmaschine als Eingangsgröße aufweist. Zum Bestimmen des Modellwerts jeweils für die Spannung in Längs- und/oder Querrichtung kann das Modell auf mindestens eine der Größen Stromsollwert, Stromistwert und Drehzahl der Drehfeldmaschine zurückgreifen. Auf dieser Grundlage kann das Modell mit hinreichender Genauigkeit den Modellwert bestimmen, sodass in dem Normalbetrieb der Drehfeldmaschine keine beziehungsweise lediglich eine geringe Differenz zwischen Spannungssollwert und Modellwert vorliegt.

Eine Weiterbildung der Erfindung sieht vor, dass der Spannungssollwert mittels eines Reglers, insbesondere eines Reglers mit I-Anteil, ermittelt wird. Die Spannungssollwerte, die auch als Spannungsstellgrößen bezeichnet werden; in Längs- und Querrichtung werden mit Hilfe eines Reglers ermittelt. Dabei wird mit Vorteil ein Regler verwendet, der zumindest einen I-Anteil aufweist. Der I-Anteil wird von einem Integralglied dargestellt. Das Integralglied ist ein Übertragungsglied, dessen Ausgang bei konstanter Eingangsgröße für große Zeiten in eine Rampenfunktion übergeht. Das bedeutet, dass der Ausgang des Integralglieds im Wesentlichen durch Integration der Eingangsgröße gebildet wird und nur dann einem konstanten Wert zustrebt, wenn die Eingangsgröße gleich Null ist.

Eine Weiterbildung der Erfindung sieht vor, dass das Modell auf den Pulswechselrichter und/oder einen Motor der Drehfeldmaschine eingestellt wird. Um das Modell auf die Drehfeldmaschine beziehungsweise den Pulswechselrichter anzupassen, wird ein Einstellvorgang durchgeführt. Dabei können beispielsweise bekannte Regelparameter in das Modell transferiert werden oder eine Kalibrierung des Modells durchgeführt werden. Bei letzterer Vorgehensweise wird das vollständig aufgebaute System aus Drehfeldmaschine, Pulswechselrichter und Modell betrieben und während des Betriebs das Modell derart eingestellt, dass es die Eigenschaften der Drehfeldmaschine beziehungsweise des Pulswechselrichters mit hinreichender Genauigkeit wiedergeben kann. Alternativ können aber auch, wie bereits beschrieben, bekannte Werte in das Modell transferiert werden. Diese Werte können bereits vor einem Betrieb der Drehfeldmaschine bestimmt worden sein.

Eine Weiterbildung der Erfindung sieht vor, dass bei Auslösen des Fehlersignalsdie Drehfeldmaschine gestoppt wird. Um eine Beschädigung der Drehfeldmaschine beziehungsweise des Pulswechselrichters zu verhindern, wird die Drehfeldmaschine gestoppt, sobald das Fehlersignal ausgelöst wird. Zu diesem Zweck kann der Spannungssollwert auf einen Wert gesetzt werden, mit welchem die Drehfeldmaschine steuernd und/oder regelnd angehalten werden kann.

Die Erfindung betrifft weiterhin eine Drehfeldmaschine, insbesondere zur Durchführung des vorstehend beschriebenen Verfahrens, mit einem Pulswechselrichter und einer Steuerungs- und/oder Regelungseinrichtung zur Bestimmung eines Stromsollwerts jeweils für einen Strom in Längs- und/oder Querrichtung aufgrund eines vorgegebenen Drehmoments, zur Ermittlung eines Spannungssollwerts jeweils für eine Spannung in Längs- und/oder Querrichtung anhand des Stromsollwerts und/oder eines an dem Pulswechselrichter bestimmten Stromistwerts und zur Steuerung und/oder Regelung der Drehfeldmaschine entsprechend des ermittelten Spannungssollwerts. Dabei ist vorgesehen, dass die Steuerungs- und/oder Regelungseinrichtung zusätzlich zur Bestimmung eines Modellwerts jeweils für die Spannung in Längs- und/oder Querrichtung mittels eines Modells, zur Ermittlung der Differenz zwischen Spannungssollwert und Modellwert und zur Auslösung eines Fehlersignals bei Überschreitung einer vorgebbaren Maximaldifferenz vorgesehen ist. Mittels der Steuerungs- und/oder Regelungseinrichtung kann also das vorstehend beschriebene Verfahren auf einfache Weise umgesetzt werden. Die Steuerungs- und/oder Regelungseinrichtung ist ohnehin an der Drehfeldmaschine vorgesehen, um den Stromsollwert aufgrund des vorgegebenen Drehmoments zu bestimmen, den Spannungssollwert zu ermitteln und die Drehfeldmaschine entsprechend diesem zu steuern und/oder zu regeln.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine schematische Darstellung einer Drehfeldmaschine mit einem Pulswechselrichter, und
- Figur 2: eine schematische Darstellung eines Verfahrens zum Betreiben der Drehfeldmaschine.

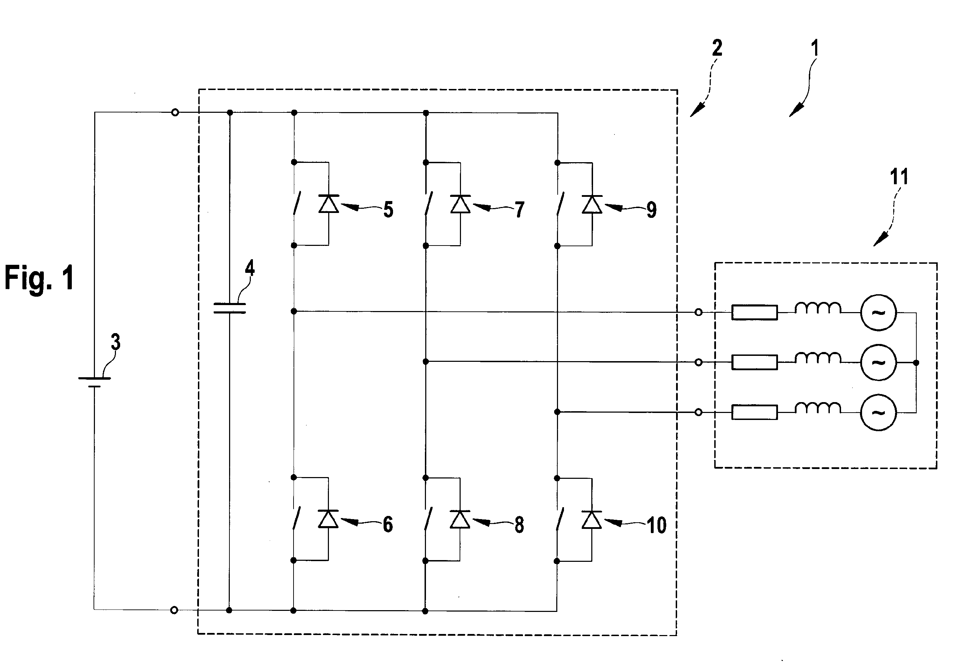

Die Figur 1 zeigt eine schematische Darstellung einer Drehfeldmaschine 1 mit drei in Sternschaltung miteinander verbundenen Antriebssträngen. Die Drehfeldmaschine 1 verfügt über einen Pulswechselrichter 2. Drehfeldmaschine 1 und Pulswechselrichter 2 sind an eine Stromversorgung 3 angeschlossen, deren Spannung mittels einer nicht dargestellten Steuerungs- und/oder Regelungseinrichtung gesteuert und/oder geregelt werden kann. Weiterhin ist in dem Pulswechselrichter 2 ein Kondensator 4 und Pulswechselrichterelemente 5, 6, 7, 8, 9 und 10 vorgesehen. Die Drehfeldmaschine 1 verfügt über einen Arbeitsteil 11 mit den Antriebssträngen, welcher über eine nicht dargestellte Welle ein Drehmoment zur Verfügung stellt.

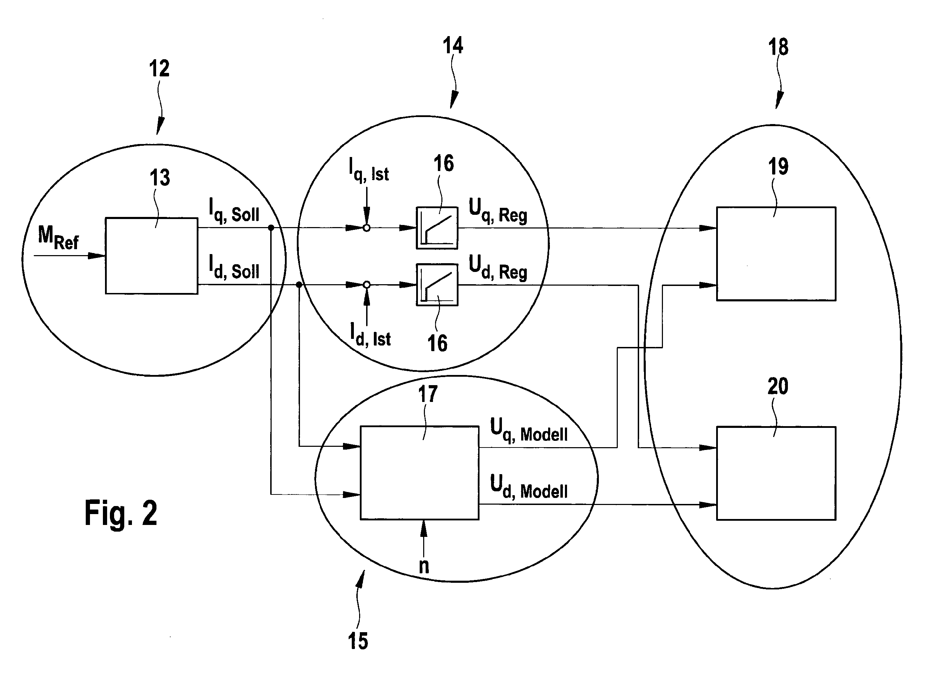

Die Figur 2 zeigt ein schematisches Ablaufdiagramm für ein Verfahren zum Betreiben der Drehfeldmaschine 1. Das hier dargestellte Verfahren wird mittels der Steuerungs- und/oder Regelungseinrichtung der Drehfeldmaschine 1 umgesetzt. In einem Abschnitt 12 wird ein Stromsollwertjeweils für einen Strom in Längsrichtung (I_{q, Soll}) und Querrichtung (I_{d, Soll}) aufgrund eines vorgegebenen Drehmoments (M_{Ref}) bestimmt. Dies ist in dem Abschnitt 12 durch den Kasten 13 dargestellt. Der Stromsollwert in Längs- und/oder Querrichtung dient nun als Eingangsgröße für die Abschnitte 14 und 15. Der Abschnitt 14 weist als zusätzliche Eingangsgrößen noch einen Stromistwert jeweils in Längsrichtung (I_{q, Ist}) und Querrichtung (I_{d, Ist}) auf, während der Abschnitt 15 als zusätzliche Eingangsgröße die Drehzahl (n) aufweist. Der Stromistwert wird an dem Pulswechselrichter 2 bestimmt, die Drehzahl stammt von einem Drehzahlsensor (nicht dargestellt) der Drehfeldmaschine 1. In Abschnitt 14 wird mittels zweier Regler 16, die jeweils einen 1-Anteil aufweisen, aus dem Stromsollwert und/oder dem Stromistwert ein Spannungssollwert jeweils in Längsrichtung (U_{q, Reg}) und Querrichtung (U_{d, Reg}) ermittelt. Gleichzeitig wird in dem Abschnitt 15 mittels eines Modells (symbolisiert durch den Kasten 17) aus dem Stromsollwert und/oder dem Stromistwert, insbesondere unter Verwendung der Drehzahl, ein Modellwert bestimmt, auch hier jeweils für eine Spannung in Längsrichtung (U_{q, Modell}) und Querrichtung (U_{d, Modell})-Sowohl der Spannungssollwert als auch der Modellwert liegen als Eingangsgrößen an einem Abschnitt 18 vor. In diesem werden mittels eines Komparators 19 der Spannungssollwert und der Modellwert in Längsrichtung verglichen, während mittels eines Komparators 20 der Spannungssollwert und der Modellwert für die Querrichtung verglichen werden. Dabei wird eine Differenz jeweils für Längs- und Querrichtung bestimmt.

Überschreitet diese Differenz eine vorgebbare Maximaldifferenz, so wird von der Steuerungs- und/oder Regelungseinrichtung ein Fehlersignal ausgelöst. Bei Vorliegen des Fehlersignals kann die Drehfeldmaschine 1 durch geeignetes Steuern und/oder Regeln angehalten werden, um weitere Beschädigungen zu vermeiden. Liegt kein Fehler vor, befindet sich die Drehfeldmaschine 1 also in einem Normalbetrieb, so wird der in dem Abschnitt 14 bestimmte Spannungssollwert zum Steuern und/oder Regeln der Drehfeldmaschine 1 verwendet. Das Modell (Kasten 17) ist bei der beschriebenen Vorrichtung hinreichend genau auf die Drehfeldmaschine 1 abgestimmt, sodass in dem Normalbetrieb keine oder lediglich eine kleine Differenz zwischen dem Modellwert und dem Spannungssollwert vorliegt. Die beschriebene Drehfeldmaschine kann vor allem für den elektrischen Antrieb eines Hybridfahrzeugs eingesetzt werden, es ist jedoch auch eine Anwendung bei anderen elektrischen Antrieben möglich.

## Patentansprüche

1. Verfahren zum Betreiben einer einen Pulswechselrichter (2) aufweisenden Drehfeldmaschine (1) mit den Schritten:
- Bestimmen eines Stromsollwerts (I_{q, Soll} I_{d, soll}) jeweils für einen Strom in Längs- und Querrichtung aufgrund eines vorgegebenen Drehmoments (M_{Ref}),
- Ermitteln eines Spannungssollwerts (U_{q, Reg}, U_{d, Reg} jeweils für eine Spannung in Längs- und Querrichtung anhand des Stromsollwerts (I_{q, Soll}, I_{d, Soll}) und/oder eines an dem Pulswechselrichter bestimmten Stromistwerts (I_{q, Ist} I_{d, Ist}),
- Steuern und/oder Regeln der Drehfeldmaschine (1) entsprechend dem ermittelten Spannungssollwert (U_{q, Reg}, U_{d, Reg}),
**dadurch gekennzeichnet, dass** zusätzlich mit einem den Stromsollwert (I_{q, Soll}, I_{d, Soll}) und/oder den Stromistwert (I_{q, Ist}, I_{d, Ist}) und/oder eine Drehzahl (n) der Drehfeldmaschine als Eingangsgröße aufweisenden Modell ein Modellwert (U_{q, Modell}, U_{d, Modell}) jeweils für die Spannung in Längs- und Querrichtung bestimmt, die Differenz zwischen Spannungssollwert (U_{q, Reg}, U_{d, Reg}) und Modellwert (U_{q, Modell}, U_{d, Modell}) ermittelt und bei Überschreiten einer vorgebbaren Maximaldifferenz ein Fehlersignal ausgelöst wird.

2. Verfahren nach Anspruch 1, **dadurch gekennzeichnet, dass** der Spannungssollwert (U_{q, Reg}, U_{d,} R_{eg}) mittels eines Reglers (16), insbesondere eines Reglers (16) mit 1-Anteil, ermittelt wird.

3. Verfahren nach einem der vorhergehenden Ansprüche, **dadurch gekennzeichnet, dass** das Modell auf den Pulswechselrichter (2) und/oder einen Motor (11) der Drehfeldmaschine (1) eingestellt wird.

4. Verfahren nach einem der vorhergehenden Ansprüche, **dadurch gekennzeichnet, dass** bei Auslösen des Fehlersignals die Drehfeldmaschine (1) gestoppt wird.

5. Drehfeldmaschine (1), insbesondere zur Durchführung des Verfahrens nach einem oder mehreren der vorhergehenden Ansprüche, mit einem Pulswechselrichter (2) und einer Steuerungs- und/oder Regelungseinrichtung zur Bestimmung eines Stromsollwerts(I_{q, Soll}, I_{d, Soll}) jeweils für einen Strom in Längs- und Querrichtung aufgrund eines vorgegebenen Drehmoments (M_{Ref}), zur Ermittlung eines Spannungssollwerts (I_{q, Soll}, I_{d, Soll}), jeweils für eine Spannung in Längs- und Querrichtung anhand des Stromsollwerts I_{q, soll}, I_{d, Soll}) und/oder eines an dem Pulswechselrichter (2) bestimmten Stromistwerts (I_{q, Ist}, I_{d, Ist}) und zur Steuerung und/oder Regelung der Drehfeldmaschine (1) entsprechend des ermittelten Spannungssollwerts (U_{q, Reg}, U_{d, Reg}), **dadurch gekennzeichnet, dass** die Steuerungs- und/oder Regelungseinrichtung zusätzlich zur Bestimmung eines Modellwerts (U_{q, Modell}, U_{d, Modell}) jeweils für eine Spannung in Längs- und Querrichtung mittels eines den Stromsollwert (I_{q, Soll}, I_{d, Soll}) und/oder den Stromistwert (I_{q, Ist}, I_{d, Ist}) und/oder eine Drehzahl (n) der Drehfeldmaschine als Eingangsgröße aufweisenden Modells, zur Ermittlung der Differenz zwischen Spannungssollwert (U_{q, Reg}, U_{d, Reg}) und Modellwert (U_{q, Modell}, U_{d, Modell}) und zur Auslösung eines Fehlersignals bei Überschreitung einer vorgebbaren Maximaldifferenz vorgesehen ist.

## Claims

1. Method for operating a rotating-field machine (1) having a pulse-controlled inverter (2), said method comprising the following steps:
- determining a current setpoint value (I_{q, Set,} I_{d, Set}) in each case for a current in the longitudinal direction and the transverse direction owing to a predetermined torque (M_{Ref}),
- ascertaining a voltage setpoint value (U_{q, Reg}, U_{d, Reg}) in each case for a voltage in the longitudinal and transverse direction on the basis of the current setpoint value (I_{q, Set}, I_{d, set}) and/or a current actual value (I_{q, Act}, I_{d, Act}) determined at the pulse-controlled inverter,
- controlling and/or regulating the rotating-field machine (1) corresponding to the ascertained voltage setpoint value (U_{q, Reg}, U_{d, Reg}),
**characterized in that**, in addition, using a model having the current setpoint value (I_{q, set}, I_{d, Set}), and/or the current actual value (I_{q, Act}, I_{d, Act}) and/or a speed (n) of the rotating-field machine as input variable, a model value (U_{q, Model}, U_{d, Model}) is determined in each case for the voltage in the longitudinal and transverse direction, the difference between the voltage setpoint value (U_{q, Reg}, U_{d, Reg}) and the model value (U_{q, Model}, U_{d, Model}) is determined, and, in the event that a predeterminable maximum difference is exceeded, an error signal is triggered.

2. Method according to Claim 1, **characterized in that** the voltage setpoint value (U_{q, Reg}, U_{d, Reg}) is ascertained by means of a controller (16), in particular a controller (16) with an I component.

3. Method according to one of the preceding claims, **characterized in that** the model is adjusted to the pulse-controlled inverter (2) and/or a motor (11) of the rotating-field machine (1).

4. Method according to one of the preceding claims, **characterized in that**, in the event of triggering of the error signal, the rotating-field machine (1) is stopped.

5. Rotating-field machine (1), in particular for implementing the method according to one or more of the preceding claims, comprising a pulse-controlled inverter (2) and a control and/or regulation device for determining a current setpoint value (I_{q, Set}, I_{d, Set}) in each case for a current in the longitudinal and transverse direction owing to a predetermined torque (M_{Ref}), for ascertaining a voltage setpoint value (U_{q, Reg}, U_{d, Reg}) in each case for a voltage in the longitudinal and transverse direction on the basis of the current setpoint value (I_{q, set}, I_{d, Set}) and/or a current actual value (I_{q, Act}, I_{d, Act}) determined at the pulse-controlled inverter (2), and for controlling and/or regulating the rotating-field machine (1) corresponding to the ascertained voltage setpoint value (U_{q, Reg}, U_{d, Reg}), **characterized in that** the control and/or regulation device is additionally provided for determining a model value (U_{q, Model}, U_{d, Model}) in each case for a voltage in the longitudinal and transverse direction by means of a model having the current setpoint value (I_{q, set}, I_{d, set}) and/or the current actual value (I_{q, Acts}, I_{d, Act}) and/or a speed (n) of the rotating-field machine as input variable, for determining the difference between the voltage setpoint value (U_{q, Reg}, U_{d, Reg}) and the model value (U_{q, Model}, U_{d, Model}) and for triggering an error signal in the event that a predeterminable maximum difference is exceeded.

## Revendications

1. Procédé de conduite d'une machine (1) à champ tournant présentant un onduleur pulsé (2), le procédé comportant les étapes qui consistent à :
sur la base d'un couple de rotation (M_{Ref}) prédéterminé, déterminer une valeur de consigne de courant (I_{q, Soll}, I_{d, Soll}) pour le courant dans la direction longitudinale et le courant dans la direction transversale,
à l'aide de la valeur de consigne de courant (I_{q, Soll}, I_{d, Soll}) et/ou d'une valeur effective du courant (I_{q, Ist}, I_{d, Ist}) déterminée sur l'onduleur pulsé, déterminer une valeur de consigne de tension (U_{q, Reg}, U_{d, Reg}) pour une tension dans la direction longitudinale et une tension dans la direction transversale,
commander et/ou réguler la machine (1) à champ tournant en correspondance à la valeur de consigne de tension (U_{q, Reg}, U_{d, Reg}) ainsi déterminée,
**caractérisé en ce que**
en plus d'un modèle présentant comme grandeurs d'entrée la valeur de consigne de courant (I_{q,Soll}, I_{d,Soll}), la valeur effective de courant (I_{q,Ist}, I_{d,Ist}) et/ou la vitesse de rotation (n) de la machine à champ tournant, une valeur de modèle (U_{q,Modell}, U_{d,Modell}) est déterminée pour la tension dans la direction longitudinale et la tension dans la direction transversale,
**en ce que** la différence entre la valeur de consigne de tension (U_{q, Reg}, U_{d, Reg}) et la valeur du modèle (U_{q, Modell}, U_{d, Modell}) est déterminée et
**en ce qu'**un signal de défaut est délivré lorsqu'une différence maximale prédéterminée est dépassée.

2. Procédé selon la revendication 1, **caractérisé en ce que** la valeur de consigne de tension (U_{q,Reg}, U_{d,Reg}) est déterminée au moyen d'un régulateur (16) et en particulier d'un régulateur (16) à partie I.

3. Procédé selon l'une dés revendications précédentes, **caractérisé en ce que** le modèle est réglé sur l'onduleur pulsé (2) et/ou le moteur (11) de la machine (1) à champ tournant.

4. Procédé selon l'une des revendications précédentes, **caractérisé en ce que** la machine (1) à champ tournant est arrêtée lorsque le signal de défaut est délivré.

5. Machine (1) à champ tournant, en particulier servant à exécuter le procédé selon l'une ou plusieurs des revendications précédentes, et présentant un onduleur pulsé (2) et un dispositif de commande et/ou de régulation qui détermine une valeur de consigne de courant (I_{q, Soll}, I_{d,Soll}) pour le courant dans la direction longitudinale et le courant dans la direction transversale sur la base d'un couple de rotation (M_{Ref}) prédéterminé, pour déterminer une valeur de consigne de tension (U_{q, Reg}, U_{d, Reg}) pour la tension dans la direction longitudinale et la tension dans la direction transversale à l'aide de la valeur de consigne de courant (I_{q,Soll}, I_{d,soll}) et/ou d'une valeur effective du courant (I_{q,Ist}, I_{d,Ist}) déterminée sur l'onduleur pulsé (2) et pour commander et/ou réguler la machine (1) à champ tournant en correspondance à la valeur de consigne de tension (U_{q,Reg}, U_{d,Reg}) ainsi déterminée, **caractérisée en ce que**
le dispositif de commande et/ou de régulation est prévu de plus pour déterminer une valeur de modèle (U_{q,Modell}, U_{d,Modell}) pour la tension dans la direction longitudinale et de la tension dans la direction transversale au moyen d'un modèle qui présente comme grandeurs d'entrée la valeur de consigne de courant (I_{q,soll}, I_{d,Soll}), la valeur effective du courant (I_{q,Ist}, I_{d,Ist}) et/ou la vitesse de rotation (n) de la machine à champ tournant, pour déterminer la différence entre la valeur de consigne de tension (U_{q,Reg}, U_{d,Reg}) et la valeur du modèle (U_{q,Modell}, U_{d,Modell}) et pour délivrer un signal de défaut lorsqu'une différence maximale prédéterminée est dépassée.
